# EUROPEAN PATENT APPLICATION

(11) **EP 2 632 094 A1**
(43) Date of publication of application: **28.08.2013**
(21) Application number: 12156281.3
(22) Date of filing: 21.02.2012
(51) Int. Cl.: H04L 12/58

(54) **Method, system and apparatus for managing related messages at a communication device**

(71) Applicant: Research In Motion Limited, Waterloo, ON N2L 3W8 (CA)
(72) Inventor: Balannik, Vadim, Rolling Meadows, IL 60008 (US); Ellis, Patrick, Rolling Meadows, IL 60008 (US)
(74) Representative: MERH-IP Matias Erny Reichl Hoffmann

(57) **Abstract**

A method, system and apparatus for managing related messages at a communication device are provided. Related messages are received, at a communication device comprising a processor and a communication interface. A most recent message of the related messages is automatically stored at an inbox folder in a memory. Remaining messages of the related messages are automatically storing in a given folder at the memory, the given folder different from the inbox folder.

## Description

### FIELD

The specification relates generally to communication devices, and specifically to a method, system and apparatus for managing related messages at a communication device.

### BACKGROUND

The evolution of computers is currently quite active in the mobile device environment. It is now well-known to including calendaring, contacts, and messaging functions in mobile devices. More recently, there has been a veritable explosion of the number and type of applications that are configured to the unique form factors and computing environments of mobile devices.

### SUMMARY

An aspect of the specification provides a method comprising: receiving, at a communication device comprising a processor and a communication interface, related messages; automatically storing, via the processor, a most recent message of the related messages at an inbox folder in a memory; and, automatically storing remaining messages of the related messages in a given folder at the memory, the given folder different from the inbox folder.

The method can further comprise: when a new related message is received at the communication device after the most recent message, automatically moving, via the processor, the most recent message from the inbox folder to the given folder, such that the new related message becomes a more recent message; and automatically storing, via the processor, the new related message in the inbox folder.

Automatically storing the remaining messages in the given folder can occur when a flag associated with the related messages is indicative that the remaining messages are to be moved, the flag stored in the memory in association with one or more of the related messages. The flag can be stored in the memory when at least one of a button, a checkbox, and a radio button, is actuated at the communication device in association with at least one of the related messages.

The related messages can be related in a thread.

The method can further comprise generating the given folder.

The given folder can be one of: associated only with the related messages; or enabled to store all messages automatically moved from the inbox folder when any related messages are received at the communication device.

The communication device can be one of: a message server enabled to process the related messages on behalf of a client device; and, an endpoint communication device enabled to process the related messages.

At least two of the related messages can be duplicate messages, each associated with different network addresses, and only one of duplicate messages is the most recent message; the method can then further comprise: automatically storing a designated one of the duplicate messages in the inbox folder based on preference data stored in the memory, and moving the remaining duplicate messages to the given folder regardless of which is the most recent message. The designated one of the duplicate messages stored in the inbox folder can be designated as the most recent message regardless of which of the duplicate messages was actually the most recent message. The communication device can be one of: a message server enabled to process the related messages on behalf of a client device; and, an endpoint communication device enabled to process the related messages.

Another aspect of the specification provides a communication device comprising: a processor and a communication interface, the processor enabled to: receive, via the communication interface, related messages; automatically store a most recent message of the related messages at an inbox folder in a memory; and automatically store remaining messages of the related messages in a given folder at the memory, the given folder different from the inbox folder.

The processor can be further enabled to: when a new related message is received at the communication device after the most recent message, automatically move the most recent message from the inbox folder to the given folder, such that the new related message becomes a more recent message; and automatically store the new related message in the inbox folder.

The processor can be further enabled to automatically store the remaining messages in the given folder when a flag associated with the related messages is indicative that the remaining messages are to be moved, the flag stored in the memory in association with one or more of the related messages. The flag can be stored in the memory when at least one of a button, a checkbox, and a radio button, is actuated at the communication device in association with at least one of the related messages.

The related messages can be related in a thread.

The given folder can be one of: associated only with the related messages; or enabled to store all messages automatically moved from the inbox folder when any related messages are received at the communication device.

The communication device can further comprise one of: a message server enabled to process the related messages on behalf of a client device; and, an endpoint communication device enabled to process the related messages.

The processor can be further enabled to: determine that at least two of the related messages are duplicate messages, each associated with different network addresses, and only one of duplicate messages is the most recent message; automatically store a designated one of the duplicate messages in the inbox folder based on preference data stored in the memory; and, move the remaining duplicate messages to the given folder regardless of which is the most recent message. The designated one of the duplicate messages stored in the inbox folder can be designated as the most recent message regardless of which of the duplicate messages was actually the most recent message. The communication device can further comprise one of: a message server enabled to process the related messages on behalf of a client device; and, an endpoint communication device enabled to process the related messages.

A further aspect of the specification provides a computer program product, comprising a computer usable medium having a computer readable program code adapted to be executed to implement a method comprising: receiving, at a communication device comprising a processor and a communication interface, related messages; automatically storing, via the processor, a most recent message of the related messages at an inbox folder in a memory; and, automatically storing remaining messages of the related messages in a given folder at the memory, the given folder different from the inbox folder.

### BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts a system for managing related messages at a communication device, according to non-limiting implementations.

Fig. 2 depicts a communication device of the system of Fig. 1, according to non-limiting implementations.

Fig. 3 depicts a server of the system of Fig. 1, according to non-limiting implementations.

Fig. 4 depicts messages being exchanged in the system of Fig. 1, according to non-limiting implementations.

Fig. 5 depicts a representation of a messaging application for managing related messages, according to non-limiting implementations.

Fig. 6 depicts a method for managing related messages, according to non-limiting implementations.

Fig. 7 depicts the representation of the messaging application of Fig. 5 with a message and a button selected, according to non-limiting implementations.

Fig. 8 depicts the representation of the messaging application of Fig. 5 with all but a most recent message in a group of related messages stored in a given folder different from an inbox folder, according to non-limiting implementations.

Fig. 9 depicts the communication device of Fig. 2 with all but a most recent message in a group of related messages stored in a given folder different from an inbox folder, according to non-limiting implementations.

Fig. 10 depicts the representation of the messaging application of Fig. 5 with all but most recent messages in sets of related messages stored in respective given folders different from an inbox folder, according to non-limiting implementations.

Fig. 11 depicts the communication device of Fig. 2 with all but most recent messages in sets of related messages stored in respective given folders different from an inbox folder, according to non-limiting implementations.

Fig. 12 depicts a representation of a messaging application for managing related messages with all but most recent messages in sets of related messages stored in a given folder different from an inbox folder, according to non-limiting implementations.

Fig. 13 depicts a communication device for managing related messages with all but most recent messages in sets of related messages stored in a given folder different from an inbox folder, according to non-limiting implementations.

Fig. 14 depicts the system of Fig. 1 with at least one further message being received at the device of Fig. 2, according to non-limiting implementations.

Fig. 15 depicts the representation of Fig. 10 updated with the at least one further message of Fig. 14 received, according to non-limiting implementations.

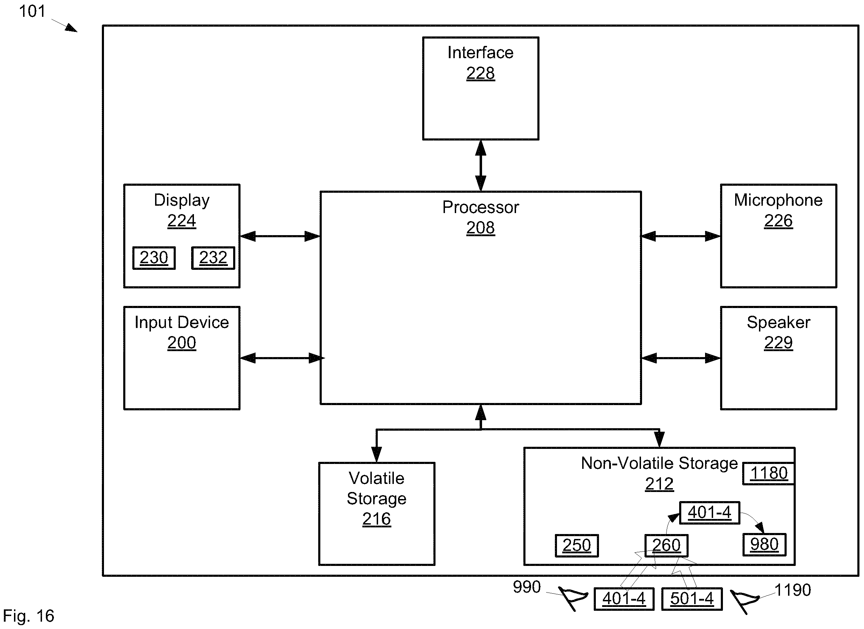

Fig. 16 depicts the communication device of Fig. 11 with all but most recent messages in sets of related messages stored in respective given folders different from an inbox folder, according to non-limiting implementations.

Fig. 17 depicts a system for disambiguation of duplicate messages when managing related messages, according to non-limiting implementations.

Fig. 18 depicts a representation of a messaging application for managing related messages with all but most recent messages in sets of related messages stored in a given folder different from an inbox folder, according to non-limiting implementations.

Fig. 19 depicts the representation of Fig. 18 with message disambiguation implemented therein, according to non-limiting implementations.

Fig. 20 depicts a system for disambiguation of duplicate messages when managing related messages, according to non-limiting implementations.

Fig. 21 depicts a system for managing related messages at a communication device, according to non-limiting implementations.

### DETAILED DESCRIPTION

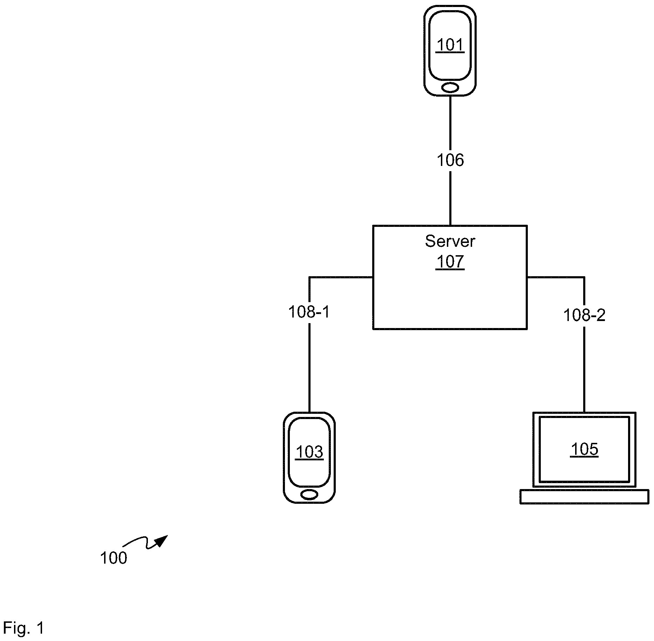

Fig. 1 depicts a system 100 for managing related messages at a communication device 101 enabled to communicate with one or more communication devices 103, 105 via link 106, links 108-1, 108-2 and at least one server 107, and according to non-limiting implementations. Communication device 101 will be also referred to hereafter as device 101. This convention will be used elsewhere in the present specification. Furthermore, links 108-1, 108-2 will also be referred to hereafter generically as a link 108, and collectively as links 108. This convention will also be used elsewhere in the present specification. It is further appreciated that devices 101, 103, 105 can send messages to one another, for example, related messages in an email thread, as will be explained hereafter. The messages can be exchanged via a communication network, and it is further appreciated that at least one server 107 can be an element of such a communication network.

In any event, at least device 101 is generally enabled to manage related messages such that only a most recent one of the related messages is stored in an inbox folder, as will be presently be explained.

It is further more appreciated that while only three devices 101, 103, 105 are depicted in Fig. 1, system 100 can comprise any suitable number of devices, including hundred to thousands to millions of devices. Indeed, system 100 can comprise any number of devices enabled to send messages on a communication network, for example to device 101.

Device 101 can be any type of electronic device that can be used in a self-contained manner to interact with a communications network via link 106. It is hence appreciated that device 101 comprises any suitable communication device for communicating with devices 103, 105. Device 101 includes, but is not limited to, any suitable combination of computing devices, personal computers, laptop computers, portable electronic devices, mobile computing device, portable computing devices, tablet computing devices, laptop computing devices, desktop phones, telephones, PDAs (personal digital assistants), cellphones, smartphones and the like. Other suitable communication devices are within the scope of present implementations.

Devices 103, 105 can be similar to or different from device 101 and each of devices 103, 105 can include, but is not limited to, any suitable combination of computing devices, personal computers, laptop computers, portable electronic devices, mobile computing device, portable computing devices, tablet computing devices, laptop computing devices, PDAs (personal digital assistants), cellphones, smartphones and the like. Other suitable communication devices are within the scope of present implementations. Further, while two devices 103, 105 are depicted in Fig. 1, it is appreciated that system 100 can comprise any suitable number of communication devices with which device 101 can communicate.

Each of links 106, 108 comprises any suitable link, including any suitable combination of wired and/or wireless links, wired and/or wireless devices and/or wired and/or wireless networks, including but not limited to any suitable combination of USB (universal serial bus) cables, serial cables, wireless links, cell-phone links, cellular network links (including but not limited to 2G, 2,5G, 3G, 4G+, and the like) wireless data, Bluetooth links, NFC (near field communication) links, WiFi links, WiMax links, packet based links, the Internet, analog networks, the PSTN (public switched telephone network), access points, and the like, and/or a combination.

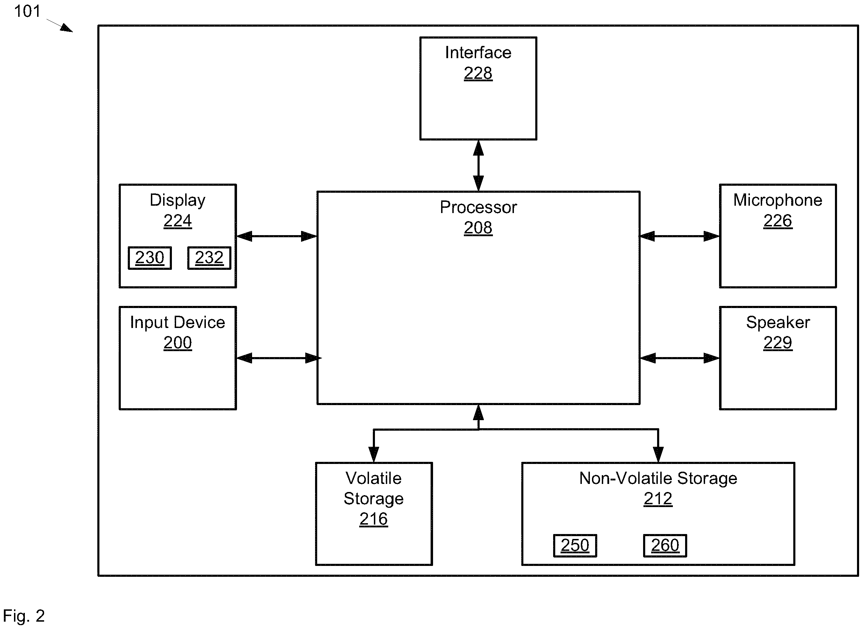

Attention is directed to Fig. 2, which depicts a schematic diagram of device 101 according to non-limiting implementations. It should be emphasized that the structure in Fig. 2 is purely exemplary, and contemplates a device that can be used for both wireless voice (e.g. telephony) and wireless data communications (e.g. email, web browsing, text, and the like). Device 101 comprises at least one input device 200 generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations.

Input from input device 200 is received at processor 208 (which can be implemented as a plurality of processors, including but not limited to one or more central processing units (CPUs)). Processor 208 is configured to communicate with a non-volatile storage unit 212 (e.g. Erasable Electronic Programmable Read Only Memory ("EEPROM"), Flash Memory) and a volatile storage unit 216 (e.g. random access memory ("RAM")). Programming instructions that implement the functional teachings of device 101 as described herein are typically maintained, persistently, in non-volatile storage unit 212 and used by processor 208 which makes appropriate utilization of volatile storage 216 during the execution of such programming instructions. Those skilled in the art will now recognize that non-volatile storage unit 212 and volatile storage 216 are examples of computer readable media that can store programming instructions executable on processor 208. Furthermore, non-volatile storage unit 212 and volatile storage 216 are also examples of memory units and/or memory modules.

Processor 208 in turn can also be configured to communicate with a display 224, and optionally a microphone 226 and a speaker 229. Display 224 comprises any suitable one of or combination of CRT (cathode ray tube) and/or flat panel displays (e.g. LCD (liquid crystal display), plasma, OLED (organic light emitting diode), capacitive or resistive touchscreens, and the like). It is generally appreciated that display 224 comprises circuitry 230 that can be controlled, for example by processor 208, to render a representation 232 of data at display 224.

Microphone 226, when present, comprises any suitable microphone for emitting sound data, which can be transmitted to device 101. Speaker 229, when present, comprises any suitable speaker for providing sound data at device 101. It is appreciated that microphone 226 and speaker 229 can be used in combination at device 101 to conduct a voice call, for example with one or more of devices 103, 105.

In some implementations, input device 200 and display 224 are external to device 103, with processor 208 in communication with each of input device 200 and display 224 via a suitable connection and/or link.

Processor 208 also connects to a network communication interface 228, referred to hereafter as interface 228, which can be implemented as one or more radios configured to communicate over link 106. In general, it will be understood that interface 228 is configured to correspond with the network architecture that is used to implement link 106. In other implementations a plurality of links with different protocols can be employed and thus interface 228 can comprise a plurality of interfaces to support each link.

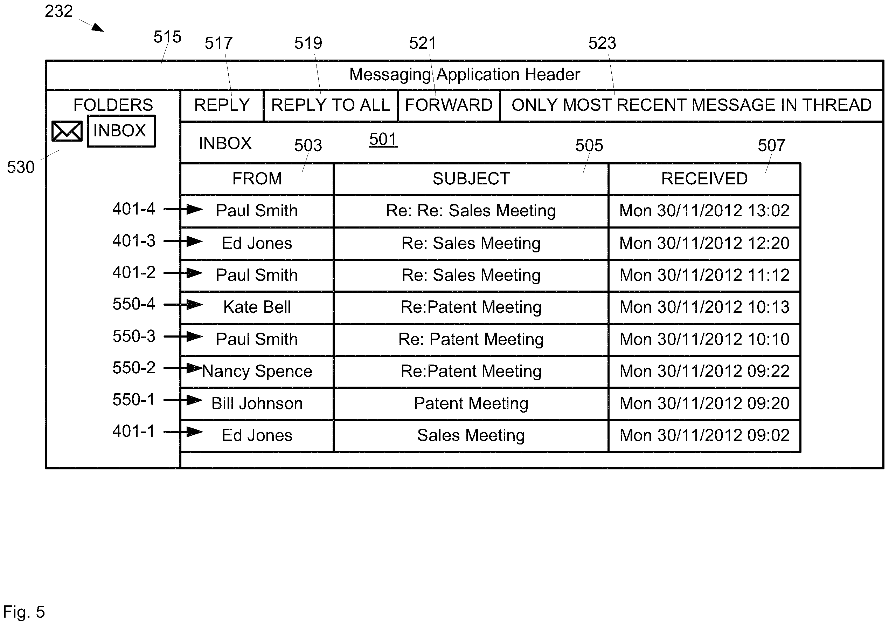

In particular, it is appreciated that non-volatile storage 212 stores a messaging application 250 for managing messages, for example an email messaging application and the like. When processor 208 processes messaging application 250, processor is enabled to receive messages and transmit response to messages. It is further appreciated that upon processing messaging application 250, processor 208 can control circuitry 230 in display device 128 to render messaging application 250 in representation 232, as described below with reference to Fig. 5.

It is further appreciated that messages received by device 101 in associate with application 250 can be stored in an inbox folder 260 at non-volatile storage 212. While inbox folder 260 is generally depicted as a discrete element in Fig. 212, it is appreciated that messages stored in non-volatile storage 212 can be stored in any suitable manner. For example, inbox folder 160 can comprise a directory indicating where each message associated with inbox folder 260 is located in non-volatile storage 212, with each message being stored at any respective suitable location at non-volatile storage 212. Indeed, any suitable configuration of inbox folder 160 is within the scope of present implementations.

In any event, it should be understood that in general a wide variety of configurations for device 101 are contemplated.

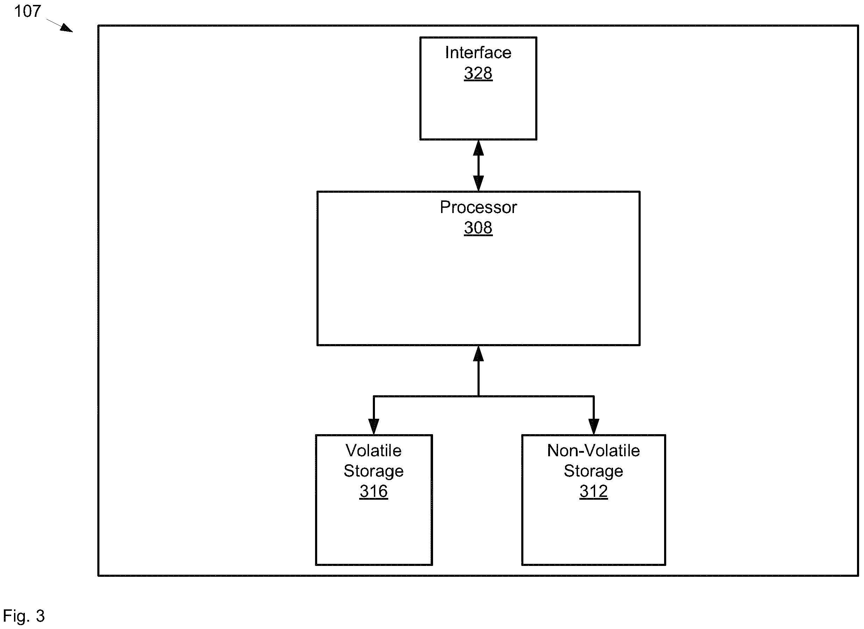

Attention is next directed to Fig. 3, which depicts a schematic diagram of server 107 according to non-limiting implementations. It is appreciated that elements of server 107 can be substantially similar to, or different from, device 101. In any event, Fig. 3 is substantially similar to Fig. 2, with like elements having like numbers, however preceded by a "3" rather than a "2"; for example, processor 308 is substantially similar to processor 208. Specifically, server 107 comprises processor 308, non-volatile storage 312, volatile storage 316, and interface 328.

Server 107 can be based on any well-known server environment including a module that houses one or more central processing units, volatile memory (e.g. random access memory), persistent memory (e.g. hard disk devices) and network interfaces to allow server 107 to communicate over links 106, 108. For example, server 107 can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for servers 107 are contemplated. It is further more appreciated that server 107 can comprise any suitable number of servers that can perform different functionality of server implementations described herein. Functionality of server 107 will be described in further detail below.

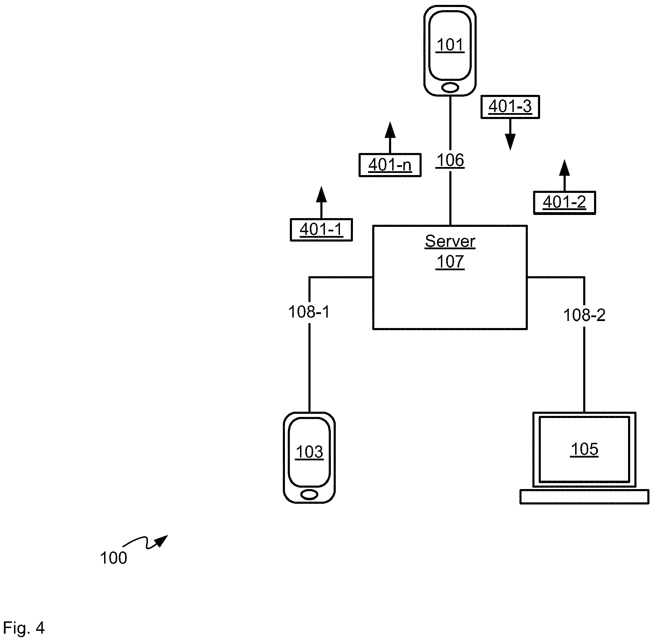

With reference to Fig. 4, which is substantially similar to Fig. 1, with like elements having like numbers, it is appreciated that devices 101, 103, 105 are generally enabled to exchange messages 401-1, 401-2, 401-3, 401-4 with one another. In a non-limiting example, message 401-1 is first transmitted from device 103 to both of devices 101, 105 (for example an e-mail addressed to both of devices 101, 105) and messages 401-2, 401-3 are transmitted after message 401-1 as replies to either the original message 401-1 and/or other related messages 401. For example, message 401-2 is transmitted from device 105 to both of devices 101, 103, and message 401-3 transmitted from device 103 to both of devices 101, 105. In other words, an initial message 401-1 is transmitted to devices 101, 105 and a "reply-to-all" function is implemented at respective messaging applications at each of devices 103, 105, such as messaging application 250, to send responses (i.e. messages 401-2, 401-3, 401-4) to message 401-1. Reply to all is then subsequently implemented for each subsequent reply at each of devices 101, 103, 105. Message 401-4 is also sent from device 105 to devices 101, 103 in response to one or more of messages 401-2, 401-3. It is appreciated that device 101 can also transmit related messages, though none are presently depicted.

Furthermore, as any suitable number of messages 401 are within the scope of present implementations, and indeed the number of related messages 401 can be anywhere from one to hundreds and/or thousands, and greater.

It is further appreciated that messages 401 are related at each of devices 101, 103, 105, and can understood to be members of a "thread" of messages 401. However, present implementations are appreciated not to be limited to threads of messages; rather messages 401 can be related at each of devices 101, 103, 105 in any suitable manner. For example, rather than a thread of messages, messages 401 can be appreciated to be related as messages in a "conversation". Indeed, any suitable method of relating messages 401 is within the scope of present implementations.

It is furthermore appreciated that the term "message" is understood to mean electronic data indicative of messages. Hence, each of messages 401 can be understood to comprise message data and/or electronic message data that is sent and received via electronic communication devices.

Attention is next directed to Fig. 5 which depicts a representation 232 of messaging application 250 at device 101. Representation 232 comprises a representation 501 ("INBOX") of inbox folder 260 for providing indications of messages 401 in a message list view. For example, representation 501 comprises a list of messages 401 received from devices 103, 105, as well as any other devices in system 100. Representation 501 further comprises a "FROM" field 503 indicating an identifier of a device from which an associated message is received and/or a user associated with the device. In depicted implementations, field 503 is populated with identifiers of a user associated with a transmitting device. For example, message 401-1 is "FROM" "Ed Jones", who is hence associated with device 103. Similarly, message 401-2 is "FROM" "Paul Smith" who is hence associated with device 105. The relationship between text identifying a user associated with a device can be stored in non-volatile storage 212 and/or received with each of messages 401 (e.g. in metadata).

Representation 501 further comprises a "SUBJECT" field 505 indicating a subject of an associated message, comprising text received with each messages 401. Representation 501 further comprises a "RECEIVED" field 507 indicating date and/or time when an associated message was received. It is appreciated, however, that the format of representation 501 of inbox folder 260 is not particularly limiting and can have any suitable format; in some implementations, the format can be configurable, for example by receiving input data from input device 200.

It is understood that representation 232 of messaging application 250 can further comprise a header 515 and virtual buttons 517, 519, 521 which, when actuated, can cause processor 208 to respectively initiate a "REPLY", a "REPLY TO ALL", or a "FORWARD" to/of a highlighted message in representation 501.

Representation 232 further comprises a virtual button 523 which, when actuated, can cause processor 208 to show only a most recent message in a group of related messages (e.g. a thread, a conversation or the like), as will presently be described.

Representation 232 further comprises an area 530 labelled "FOLDERS" which comprises folder icons associated with available folders, such as "INBOX" icon associated with inbox folder 260 (adjacent the "INBOX" icon is an envelope icon indicating that the "INBOX" icons is associated with a folder storing messages): it is appreciated that area 530 can be interactive, with folder icons rendered therein being selectable, for example by receiving input data from input device 200, such that the contents of representation 501 will change depending which folder icon is selected in area 530. For example, the icon "INBOX" is selected in Fig. 5, as indicated by the box drawn around "INBOX"; however any suitable method of rendering a folder icon in a manner that indicates the folder icon is selected is within the scope of present implementations. Further, while only one folder icon is depicted in area 530 of Fig. 5, any suitable number of folder icons is within the scope of present implementations. Indeed, it is appreciated that any suitable number of folders can be provided for storing messages and area 530 can comprise icons arranges in a structure showing relationships between the folders (e.g. folder, subfolders and the like)

It is further appreciated that representation 501 comprises several sets of related messages that are present in inbox folder 260. For example, messages 401-1, 401-2, 401-3, 401-4 are related, as messages 401-2, 401-3, 401-4 are all replies (or replies to replies and the like) to an initial message 401-1. For example, initial message 401-1 has a subject "Sales Meeting" and further messages 401 have a related subject of "Re: Sales Meeting" or "Re: Re: Sales Meeting". In other words, messages 401 are all part of the same thread.

There is a second thread in representation 501: messages 550-1, 550-2, 550-3, 550-4 having the subject "Patent Meeting". Messages 501, are from devices not explicitly depicted in Figs. 1 and 4, but are appreciated to be nonetheless present.

Indeed, while only two groups of related messages 401, 550 are depicted in Fig. 5, it is appreciated that representation 501, and hence inbox folder 260, can comprise any suitable number of messages, including groups of related messages 401, 550 and other messages which are not related to each other.

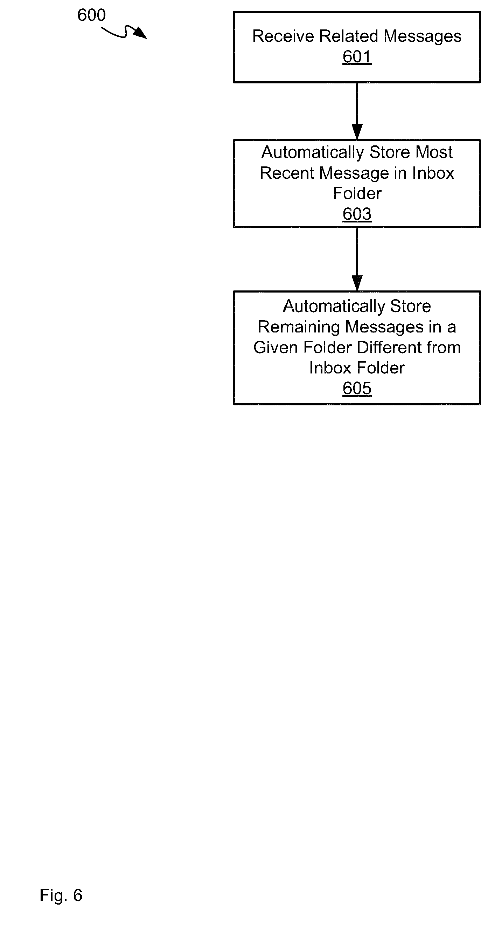

It is also appreciated that messages 401, 550 generally occupy memory space associated with inbox 260, and further obfuscate representation 501 and inbox folder 260. Hence attention is now directed to Fig. 6 which depicts a method 600 for coordinating managing related messages at a communication device, according to non-limiting implementations. In order to assist in the explanation of method 600, it will be assumed that method 600 is performed using system 100. Furthermore, the following discussion of method 600 will lead to a further understanding of system 100 and its various components. However, it is to be understood that system 100 and/or method 600 can be varied, and need not work exactly as discussed herein in conjunction with each other, and that such variations are within the scope of present implementations.

It is appreciated that, in some implementations, method 600 is implemented in system 100 by processor 208 of device 101. Indeed, method 600 is one way in which device 101 can be configured. It is to be emphasized, however, that method 600 need not be performed in the exact sequence as shown; and likewise various blocks may be performed in parallel rather than in sequence; hence the elements of method 600 are referred to herein as "blocks" rather than "steps". It is also to be understood, however, that method 600 can be implemented on variations of system 100 as well.

At block 601, related messages 401 are received at device 101 as has already been described.

At block 603, a most recent message 401-4 of related messages 401 is automatically stored, via processor 208 at inbox folder 260 at non-volatile storage 212.

At block 605, remaining messages 401-1, 401-2, 401-3 of related messages 401 are automatically stored in a given folder at non-volatile storage 212, the given folder different from inbox folder 260.

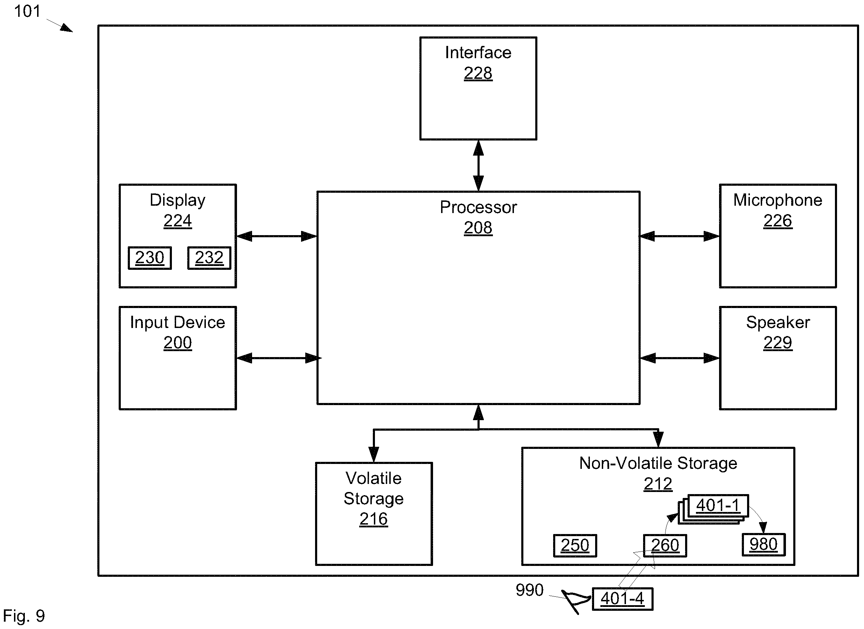

An implementation of method 600 is described hereafter with reference to Figs. 7, 8 and 9; Figs. 7 and 8 are substantially similar to Fig. 5, while Fig. 9 is substantially similar to Fig. 2, with like elements having like numbers.

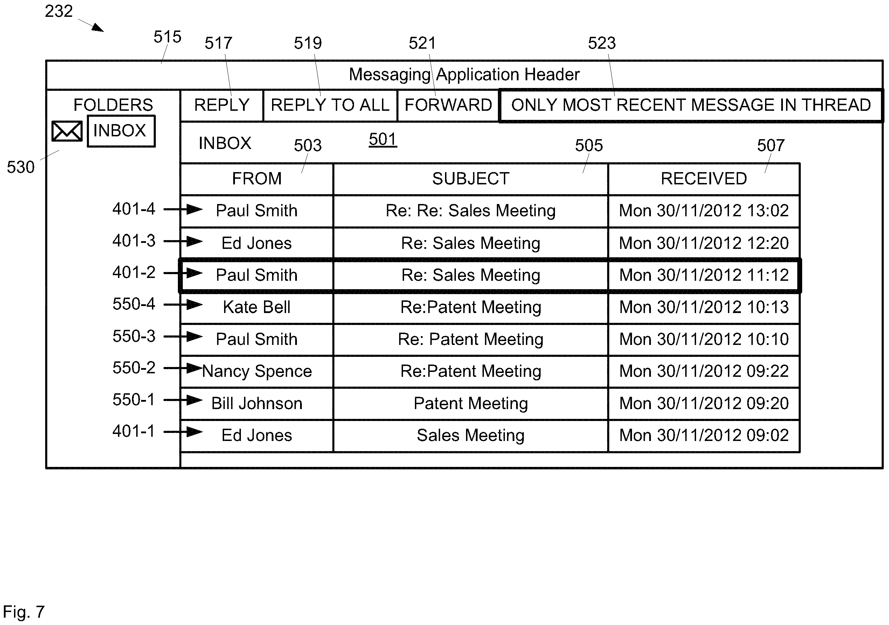

It is appreciated that, in Fig. 7, message 402-2 has been selected, for example via input device 200, as indicated by the heavy-lined box around respective fields 503, 505, 507 associated with message 402-2. However, any suitable method of indicating selection is within the scope of present implementations. It is further appreciated that button 523 has been selected (as also indicate by a heavy-lined box), indicating that only the most recent message 401 of related messages 401 is to be stored at inbox folder 260.

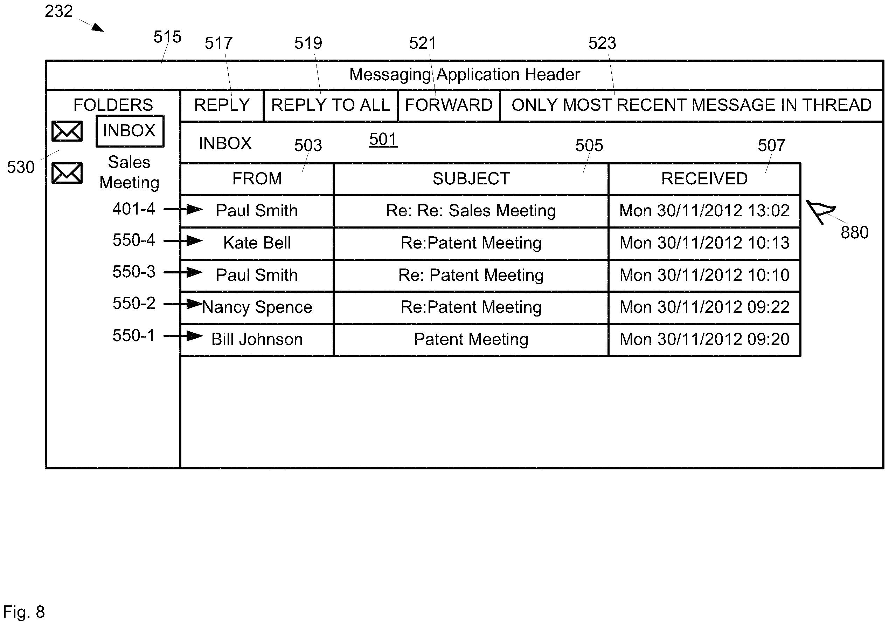

Attention is now directed to Figs. 8 and 9, which respectively depict representation 232 after selection of message 401-2 and button 523, and a change in state of device 101 thereafter. From Fig. 8, it is appreciated that messages 401-1, 401-2, 402-3 are no longer in inbox folder 260 and/or rendered in representation 501. It is further appreciated from Figs 8 and 9 that a new folder 980 has been generated and messages 401-1, 401-2, 401-3 have been moved thereto, and can be accessed by selection of the "Sales Meeting" icon in area 530. In other words, when selection of message 401-2 and button 523 occurs: a given folder 980 is generated in non-volatile storage 212; all messages 401 except for the most recent message 401-4 is moved to such; and a new folder icon "SALES MEETING" is provided in area 530 to access folder 980. While in these implementations, the icon associated with folder 980 in area 530 is automatically designated by the text provided in respective field 505 (i.e. "Sales Meeting"), in other implementations, the icon can be designated in any suitable manner, including but not limited to any suitable text (e.g. "New Folder") and/or any suitable graphical icon.

With further reference to Figs. 8 and 9, most recent message 440-4 is stored in an associated with a flag 990 in non-volatile storage 212, (and a corresponding optional graphical flag 880 is rendered proximal message 401-4 in representation 401). Flag 990 is indicative that the remaining messages 401 are to be moved to folder 980; hence flag 990 is stored in non-volatile storage 212 in association with one or more of related messages, such as message 401-4 as depicted; alternatively flag 990 could be stored with one or more of messages 401-1, 401-2, 401-3 in folder 980.

It is appreciated that blocks 603 and 605 can occur when flag 908 is stored associated with related messages 401. For example, in some instances only a first one of messages 401 can have been received, i.e. message 401-1. At this point, there is no indication as to whether or not further messages 401 will be received. The first message 401-1 can be selected and flagged, and once further messages 401 are received, blocks 603 and 605 are implemented when it is determined that message 401-1 is stored in association with flag 990.

It is appreciated that while flag 990 is depicted as a graphical icon in Fig. 9, any suitable flag is within the scope of present implementations, including but not limited to a textual flag, a numerical flag, a binary flag, a hexadecimal flag and the like. Indeed, a graphical icon is used herein simply for illustrative purposes.

It is yet further appreciated that flag 990 is stored in non-volatile storage 212 when button 523 is actuated in association with at least one of related messages 401. While in the depicted example, message 401-2 is selected, any of messages 401 can be selected to generate flag 990 when button 523 is actuated; indeed, more than one of messages 401 can be selected when button 523 is actuated.

Further, it is appreciated that while in depicted implementations button 523 is used to indicate that all but a most recent one of related messages 401 is to be moved to given folder 980, in other implementations one or more of a checkbox, a radio button, and the like can be provided and activated in association with at least one of related messages 401. Indeed, any suitable method of indicating that all but a most recent one of related messages 401 is to be moved to given folder 980 is within the scope of present implementations.

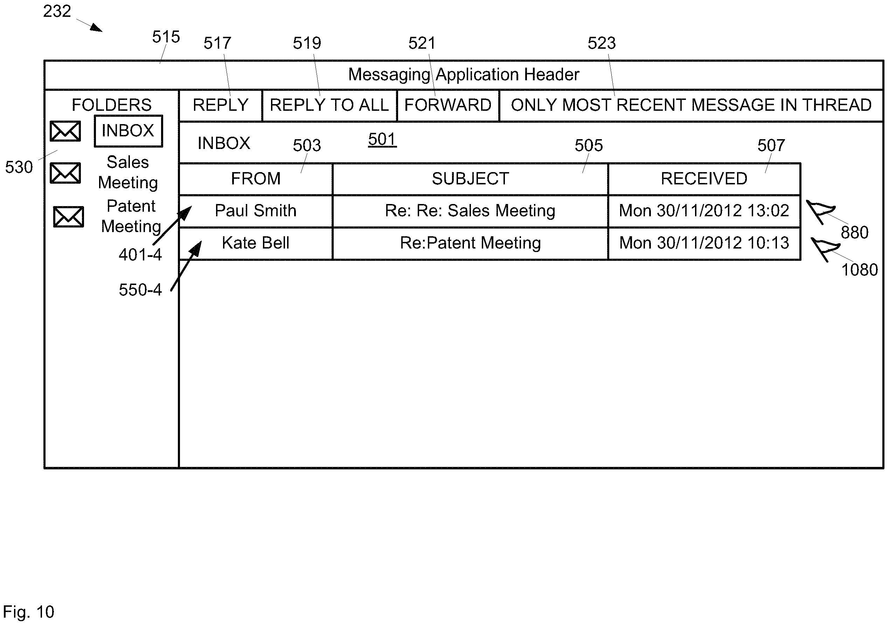

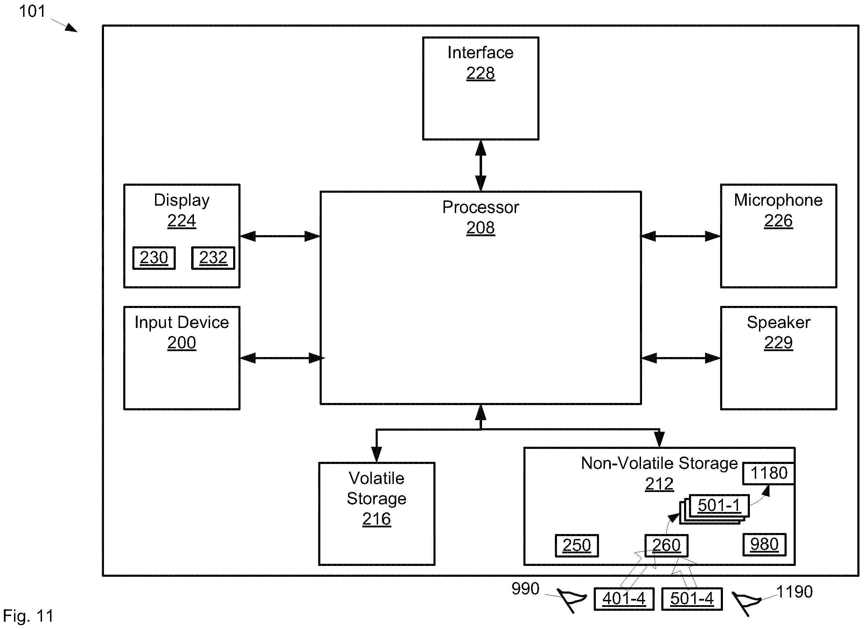

In depicted implementations, given folder 980 is associated only with related messages 401, and indeed the associated icon in area 530 is provided with text similar to that in the respective filed 505 ("Sales Meeting"). Indeed, attention is further directed to Figs. 10 and 11, which are substantially similar to Figs. 9 and 10 respectively, with like elements having like numbers. However, in these implementations, one of related messages 501 has been selected and button 523 activated, resulting in a new given folder 1180 being generated, all but a most recent one of messages 550 being moved to folder 1180, an associated icon for given folder 1180 being rendered in area 530 (i.e. "Patent Meeting") and an optional graphical flag 1080 can be rendered adjacent most recent message 550-4 of messages 550 in representation 503. Indeed, it is appreciated that for each group of related messages 401, 550 that is flagged, a different respective folder 980, 1180 is generated. Further message 550-4 is stored in association with flag 1190 in non-volatile storage 212.

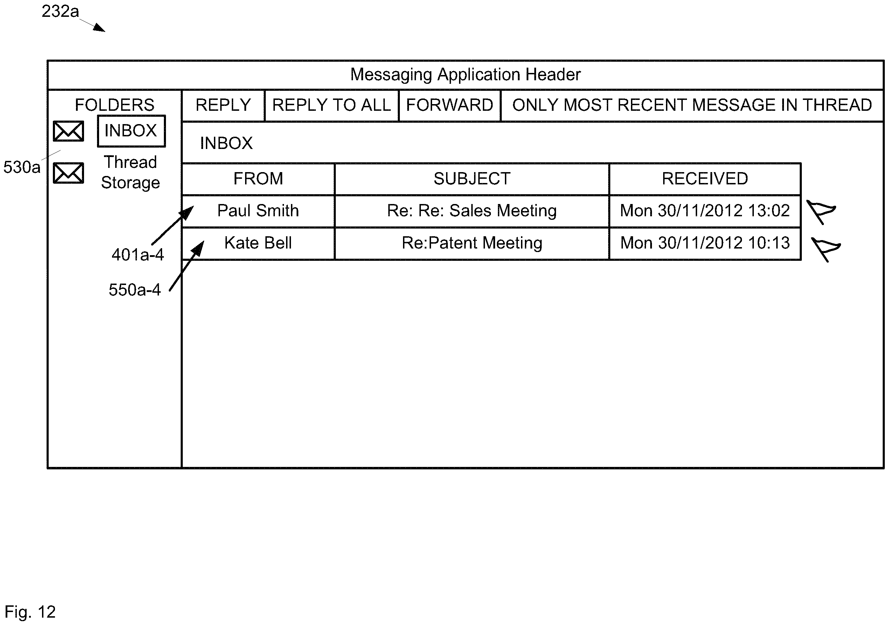

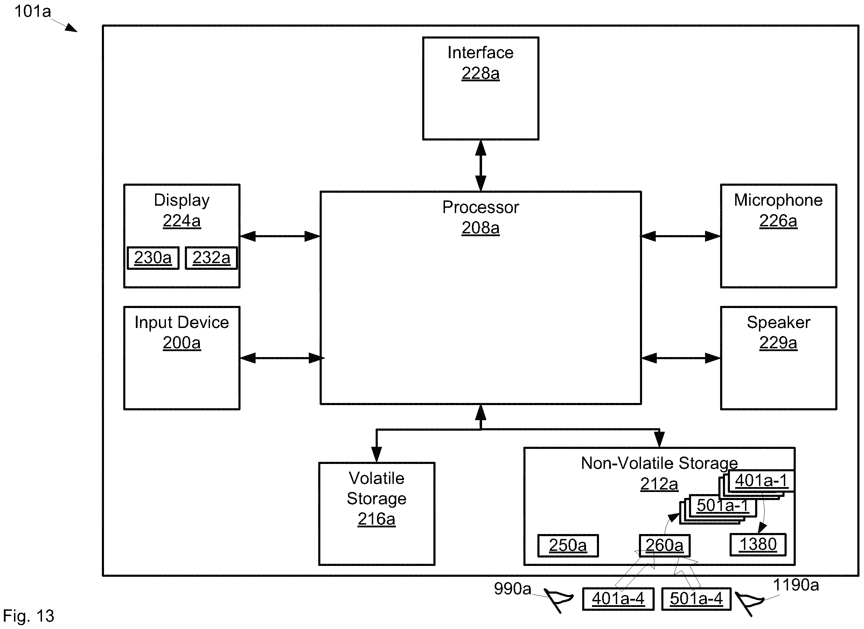

In any event, attention is next directed to Figs. 12 and 13, which are substantially similar to Fig. 10 and 11, respectively, with like elements having like number, however with an "a" appended thereto. In these implementations a device 101a is substantially similar to device 101, and comprises a processor 208a, a communication interface 228a, a display 224a (with circuitry 230a controllable to render a representation 232a), an input device 200a, non-volatile storage 212a (storing messaging application 250a, and an inbox folder 260a), and an optional microphone 226a and speaker 229a. However, device 101a is enabled to store all messages 401a, 550a automatically moved from inbox folder 260a at a common folder 1380 when any related messages 401a, 550a are received at device 101a, presuming at least one message 401, 550 in each thread has been flagged as described above. Similarly, in representation 232a, an icon "Thread Storage" associated with the common folder 1380 is rendered in area 530a. In other words, rather than respective folders 980, 1180 for each thread, one common folder 1380 stores all messages moved from inbox folder 260 when method 600 is implemented at device 101a.

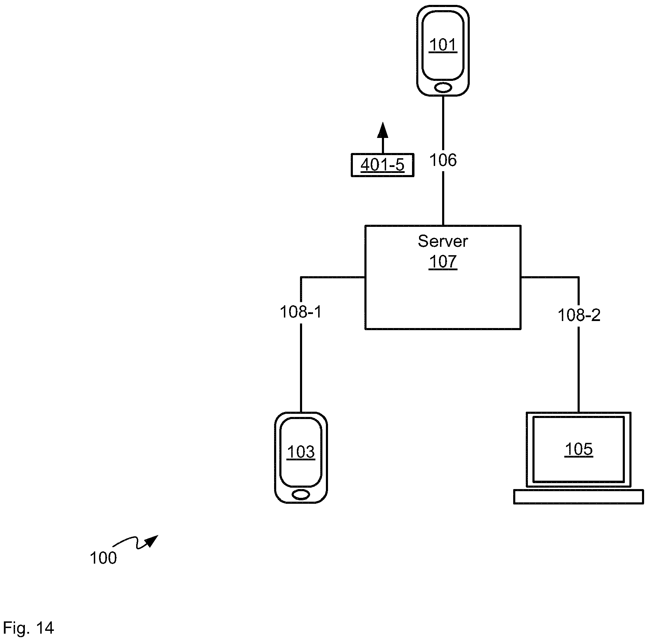

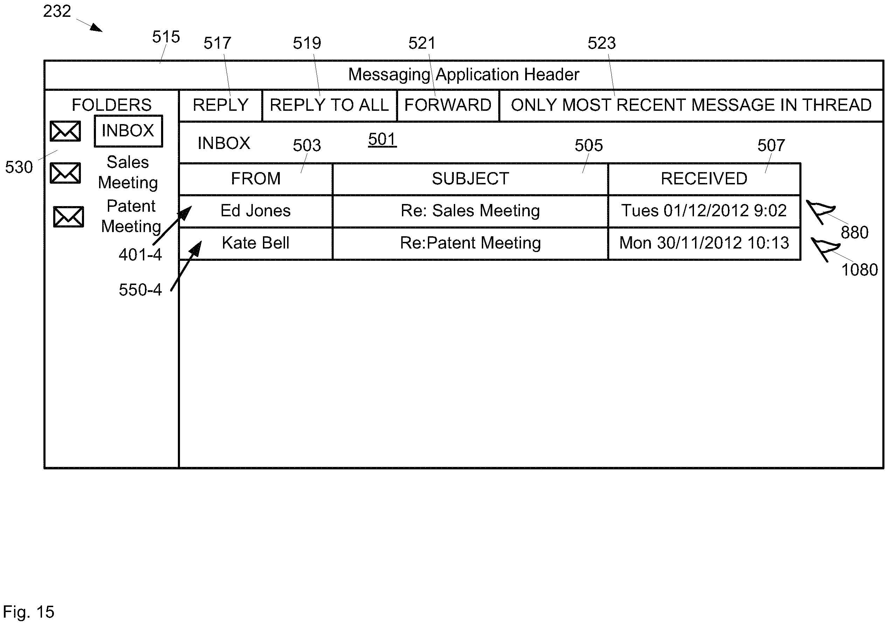

Attention is next directed to Figs. 14 and 15, which are substantially similar to Figs. 4 and 10, respectively, with like elements having like numbers. In Fig. 14 it is appreciated that a new message 401-5 in the thread of messages 401 is received at device 101 from one of devices 103, 105. Message 401-5 comprises a new related message 401 that is received after the previous most recent message 401-4. When new related message 401-5 is received, the previous most recent message 401-4 is automatically moved from inbox folder 260 to given folder 980, such that the new related message 401-5 becomes a more recent message 401. Furthermore, the new related message 401-5 is automatically stored, via processor 208 in inbox folder 260. This process is repeated for each new related message 401 received, such that only the most recently received message 401 is stored in inbox folder 260: each time a new message 401 is received, any previous related messages 401 in inbox folder 260 are moved to folder 980. Hence, the newest most recent message 401 is stored in inbox folder 260.

It is further appreciated that method 600 can be implemented automatically at device 101 without having to flag a given group of related messages. In other words, messaging application 250 can include a setting that causes all related messages to be processed via method 600 such that only the most recent message in a group of related messages is stored at inbox folder 260 without having to specifically flag a given message. In these implementations, button 523 is not present in representation 523.

It is appreciated that heretofore, implementations have been described with respect to method 600 being implemented at device 101 (i.e. an endpoint communication device enabled to process related messages 401). However, in other implementations method 600 can be implemented at server 107. For example, server 107 can comprise a message server enabled to process related messages 401 on behalf of client device 101 in a client-server environment. In these implementations, messages 401, inbox 260, folder 980 and the like can be stored at server 107 and/or a memory device accessible to server 107, with messages 401, inbox 260, folder 980 and the like accessed from client device 101 via server 101.

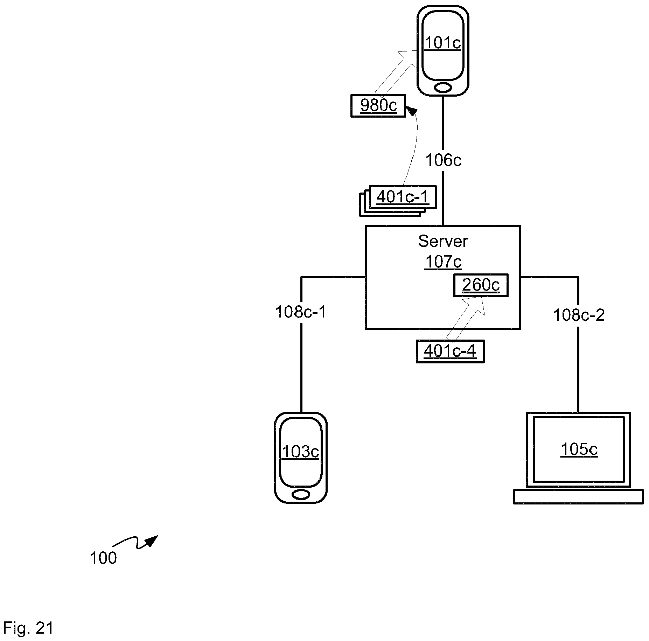

In yet further implementations, inbox folder 260 and folder 980 can reside at different memory devices. For example, in some environments, restrictions are placed on a size of an inbox folder, and when, for example, hundreds of messages are received in a thread due to non-judicious use of "reply-to-all", the maximum size of the inbox can be quickly reached, thereby preventing further messages from being stored therein. Hence, for example, inbox folder 260 can be stored at server 107 and folder 980 can be stored at client device 101, hence preventing an overly active thread from becoming full too quickly. Such an example is described below with reference to Fig. 21.

There are, however, inherent advantages to implementing method 600 at device 101. For example, message disambiguation can occur at device 101 when method 600 is implemented therein.

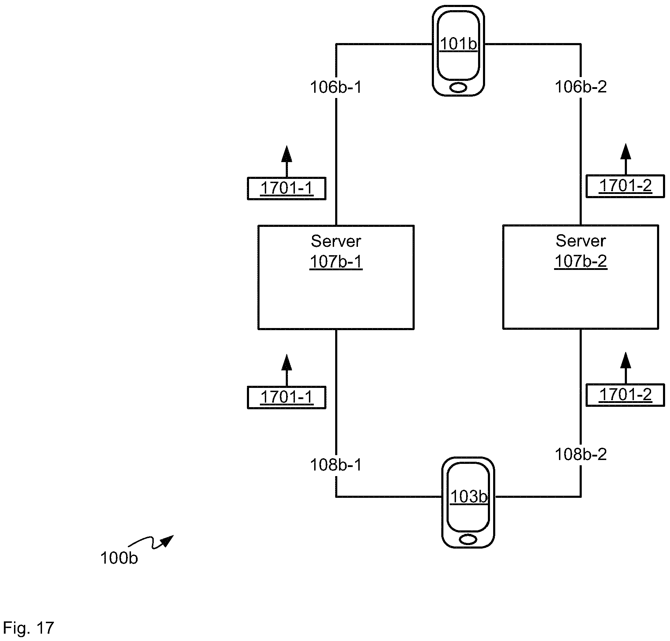

To illustrate this, attention is next directed to Fig. 17 which depicts system 100b which is similar to system 100 with like elements having like numbers however with a "b" appended thereto. System 100b includes two servers 107b-1, 107b-2, each server 107b for handling messages for respective message accounts associated device 101b. In other words, device 101b can be enabled to receive messages from two different accounts, such as a work account and a personal account, with respective servers 107b handling messages for one of the work account or the personal account. It is appreciated that system 100b is not depicted with an equivalent of device 105 for simplicity.

In any event, consider the following scenario: device 103b is used to send duplicate messages 1701-1, 1701-2 to device 101b. It is appreciated that messages 1701 are understood to be identical with regard to content, but not with regard to header information, which can include addresses and routing info etc., which can vary between messages 1701. In any event, in a non-limiting example, when a message 1701 is generated at device 103b, two different e-mail addresses can be received at a "TO" field, such as a business address associated with device 101b and a personal address associated with device 101b. Hence, when messages 1701 arrive at device 101b, they are processed as related messages 1701, for example in the same thread, as described above. However, in these implementations, when at least two of the related messages 170a are duplicate messages, but each associated with different network addresses (i.e. for each server 107b), and only one of duplicate messages 1701 is the most recent message, a designated one of duplicate messages 1701 can be automatically stored in an inbox folder based on preference data stored in a memory at device 101b; and the remaining duplicate messages 1701 can be moved to a given folder regardless of which is the most recent message.

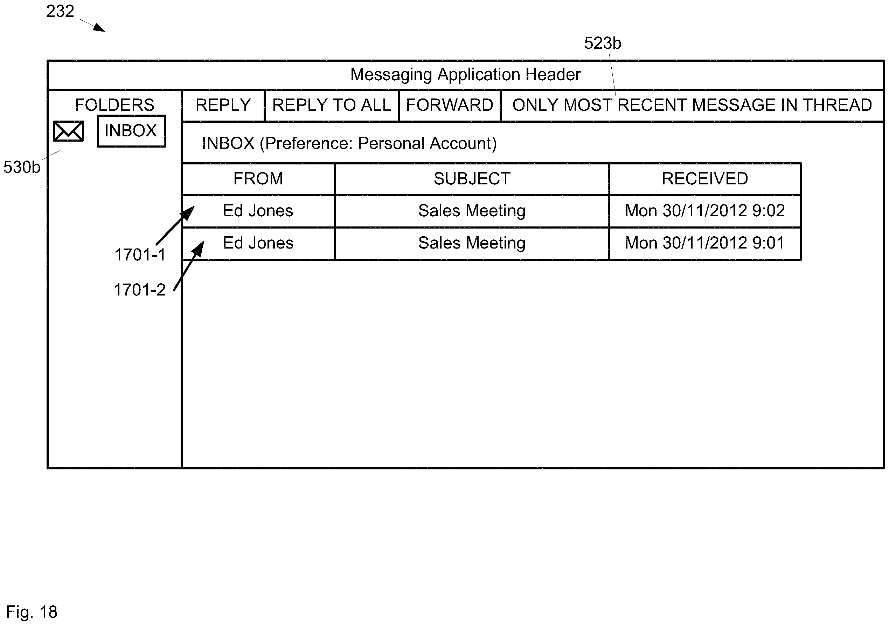

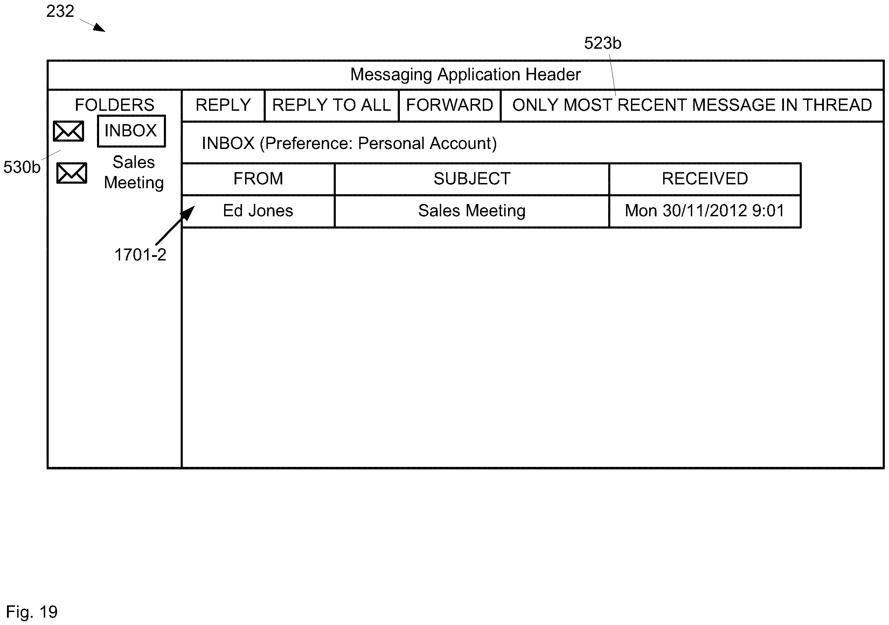

To illustrate this, attention is directed to Fig. 18, which depicts a representation 232b similar to representation 232 with like elements having like numbers with a "b" appended thereto. Furthermore a preference has been designated in a memory of device 101b (similar to non-volatile storage 212) to give preference to messages received from a personal account and/or server 107b-2; for example purposes only it will be assumed that server 107b-2 handles messages associated with a personal account, and hence message 1701-2 is associated with a personal account. It is also appreciated that message 1701-2 is received before message 1701-1 associated with a business account, as indicated by the respective received times. However, when button 523b is activated (or, alternatively, automatically), one of messages 1701 is moved from an inbox folder to a given folder as described above. However, as preference data has been stored at a memory of device 101b to give preference to the personal account, message 1701-1 is moved to the given folder rather than message 1701-2 which is nominally not the most recent message. Hence, representation 232b is updated as depicted in Fig. 19 with message 1701-1 moved to a folder "Sales Meeting" similar to implementations described above. Furthermore, in some implementations, the designated one of duplicate messages 1701 stored in the inbox folder (i.e. message 1701-2) can be designated as the most recent message 1701 regardless of which of duplicate messages 1701 was actually the most recent message 1701.

It is further appreciated that while Figs. 17 to 19 have been described with an implementation that occurs solely at device 101b, in other implementations, automatically storing a designated one of duplicate messages in an inbox folder based on preference data, and moving the remaining duplicate messages to a given folder regardless of which is the most recent message can occur at a server or a combination of a device and a server.

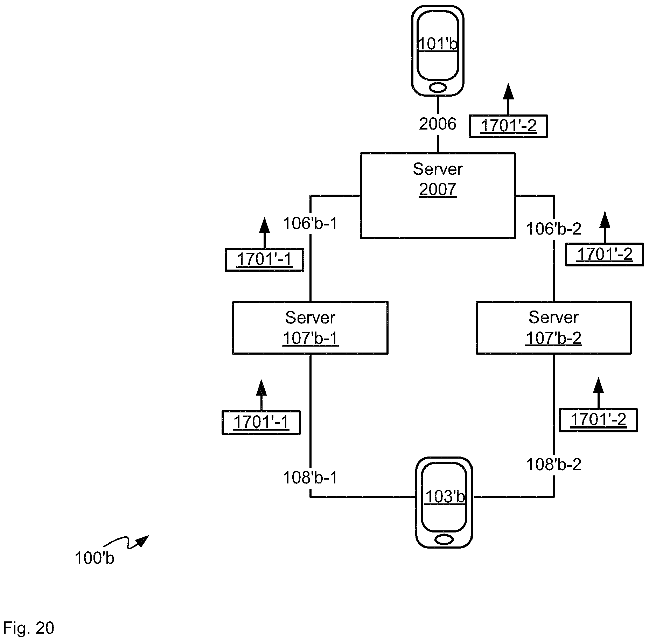

To illustrate this, attention is next directed to Fig. 20 which depicts system 100'b which is similar to system 100b with like elements having like numbers however with a prime mark "'" appended after each number. System 100'b includes two servers 107'b-1, 107'b-2, each server 107'b for handling messages for respective message accounts associated device 101'b, for example messages 1701'-1, 1701'-2 transmitted from device 103'b. In contrast to system 100b, at system 100'b device 101'b is in communication with a server 2007 via a link 2006, each similar to server 107 and link 106 described above. Server 2007 is in communication with server 107'b via links 106'b-1, 106'b-2. Server 2007 is enabled to manage messages 1701' on behalf of device 101'b. Hence, in these implementations, method 600 can be at least partially implemented at server 2007, and further, server 2007 is enabled to automatically storing a designated one of duplicate messages 1701' in an inbox folder based on preference data, and move the remaining duplicate messages 1701' to a given folder regardless of which is the most recent message. In other words, server 2007 is enabled for message disambiguation. In some implementations, server 2007 can store and/or delete any duplicate messages 1701' and transmit only a designated one of duplicate messages 1701' to an inbox folder at server 2007 and/or device 101'b, for example message 1701'-2, thereby saving bandwidth between server 2007 and device 101'b. In implementations where the designated message 1701'-2 is stored at an inbox folder at server 2007, message 1701'-2 can be retrieved for rendering at device 101'b, as depicted, at any suitable time. Indeed, in some of these implementations, device 101'b is never alerted to the remaining messages 1701'.

In any event by storing all but a most recently received message in a group of related messages to a given folder, while storing the most recently received message in an inbox folder, a less cluttered environment for processing messages is provided. Such a solution deals with a problem where, for example, hundreds of emails are received in a thread which causes an inbox to become full quite quickly. Indeed, in some environments, restrictions are placed on a size of an inbox folder, and by storing all but the most recent message in a group of related messages to a given folder, the inbox folder is prevented from becoming full.

For example, attention is directed to Fig. 21 which depicts a system 100c similar to system 100, with like elements having like numbers but with a "c" appended thereto, with devices 101c, 103c, 105c exchanging messages via links 106c, 108c-1, 108c-2. However, in these implementations, an inbox folder 260c is stored at server 107c (or separate from server 107c but accessible by server 107c), and a given folder 980c for storing all but most recent messages in a group of related messages is stored at device 101c, folder 980c similar to folder 980. Indeed, system 100c is clearly based on client-server architecture, with server 107c managing messages 401 on behalf of client device 101c. It is presumed, in these implementations, that messages 401c-1, 401c-2, 402c-3, 401c-4 have been exchanged between devices 101c, 103c, 105c, with messages 401c-1, 401c-2, 402c-3, 401c-4 stored at server 107c on behalf of client device 101c, and that method 600 is implemented at server 107c. However, when method 600 is implemented at server 107, at block 605 messages 401c-1, 401c-2, 402c-3 are transmitted to client device 101c for storage in folder 980, leaving only the most recent message 401c-4 of the group of related messages 401c stored at inbox folder 260c at server 107c. This reduces the amount of memory taken up by inbox folder 260c such that when a maximum amount of storage space is placed on a size of inbox folder 260c, such a maximum is not reached due to overly active message threads.

Those skilled in the art will appreciate that in some implementations, the functionality of devices 101, 101a, 101b, 103, 103b, 105, servers 107, 107b can be implemented using pre-programmed hardware or firmware elements (e.g., application specific integrated circuits (ASICs), electrically erasable programmable read-only memories (EEPROMs), etc.), or other related components. In other implementations, the functionality of devices 101, 101a, 101b, 103, 103b, 105, servers 107, 107b can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A method comprising:
receiving, at a communication device (101, 101a, 101b, 107c, 2007) comprising a processor (208, 208a) and a communication interface (228, 228a), related messages;
automatically storing, via the processor (208, 208a), a most recent message of the related messages at an inbox folder in a memory (212, 212a); and,
automatically storing remaining messages of the related messages in a given folder at the memory (212, 212a), the given folder different from the inbox folder.

2. The method of claim 1, further comprising:
when a new related message is received at the communication device (101, 101a, 101b, 107c, 2007) after the most recent message, automatically moving, via the processor (208, 208a), the most recent message from the inbox folder to the given folder, such that the new related message becomes a more recent message; and
automatically storing, via the processor (208, 208a), the new related message in the inbox folder.

3. The method of any claims 1 or 2, wherein the related messages are related in a thread.

4. The method of any claims 1 to 3, wherein the given folder is one of:
associated only with the related messages; or
enabled to store all messages automatically moved from the inbox folder when any related messages are received at the communication device (101, 101a, 101b, 107c,2007).

5. The method of any claims 1 to 4, wherein the communication device (101, 101a, 101b, 107c, 2007) is one of:
a message server (107c, 2007) enabled to process the related messages on behalf of a client device (101, 101a, 101b, 107c, 2007); and,
an endpoint communication device (101, 101a, 101b, 107c, 2007) enabled to process the related messages.

6. The method of any claims 1 to 5, wherein at least two of the related messages are duplicate messages, each associated with different network addresses, and only one of duplicate messages is the most recent message, the method further comprising:
automatically storing a designated one of the duplicate messages in the inbox folder based on preference data stored in the memory (212, 212a), and moving the remaining duplicate messages to the given folder regardless of which is the most recent message.

7. The method of claim 6, wherein the designated one of the duplicate messages stored in the inbox folder is designated as the most recent message regardless of which of the duplicate messages was actually the most recent message.

8. A communication device (101, 101a, 101b, 107c, 2007) comprising:
a processor (208, 208a) and a communication interface (228, 228a), the processor (208, 208a) enabled to:
receive, via the communication interface (228, 228a), related messages;
automatically store a most recent message of the related messages at an inbox folder in a memory (212, 212a); and
automatically store remaining messages of the related messages in a given folder at the memory (212, 212a), the given folder different from the inbox folder.

9. The communication device (101, 101a, 101b, 107c, 2007) of claim 8, wherein the processor (208, 208a) is further enabled to:
when a new related message is received at the communication device (101, 101a, 101b, 107c, 2007) after the most recent message, automatically move the most recent message from the inbox folder to the given folder, such that the new related message becomes a more recent message; and
automatically store the new related message in the inbox folder.

10. The communication device (101, 101a, 101b, 107c, 2007) any of claims 8 to 9, wherein the related messages are related in a thread.

11. The communication device (101, 101a, 101b, 107c, 2007) of claims 8 to 10, wherein the given folder is one of:
associated only with the related messages; or
enabled to store all messages automatically moved from the inbox folder when any related messages are received at the communication device (101, 101a, 101b, 107c,2007).

12. The communication device (101, 101a, 101b, 107c, 2007) of claims 8 to 11, further comprising one of:
a message server (107c, 2007) enabled to process the related messages on behalf of a client device (101, 101a, 101b, 107c, 2007); and,
an endpoint communication device (101, 101a, 101b, 107c, 2007) enabled to process the related messages.

13. The communication device (101, 101a, 101b, 107c, 2007) of claims 8 to 12, wherein the processor (208, 208a) is further enabled to:
determine that at least two of the related messages are duplicate messages, each associated with different network addresses, and only one of duplicate messages is the most recent message;
automatically store a designated one of the duplicate messages in the inbox folder based on preference data stored in the memory (212, 212a); and,
moving the remaining duplicate messages to the given folder regardless of which is the most recent message.

14. The communication device (101, 101a, 101b, 107c, 2007) of claims 8 to 13, wherein the designated one of the duplicate messages stored in the inbox folder is designated as the most recent message regardless of which of the duplicate messages was actually the most recent message.

15. A computer program product, comprising a computer usable medium having a computer readable program code adapted to be executed to implement a method comprising:
receiving, at a communication device (101, 101a, 101b, 107c, 2007) comprising a processor (208, 208a) and a communication interface (228, 228a), related messages;
automatically storing, via the processor (208, 208a), a most recent message of the related messages at an inbox folder in a memory (212, 212a); and,
automatically storing remaining messages of the related messages in a given folder at the memory (212, 212a), the given folder different from the inbox folder.
